# EUROPÄISCHE PATENTSCHRIFT

(11) **EP 1 758 471 B1**
(45) Veröffentlichungstag und Bekanntmachung des Hinweises auf die Patenterteilung: **31.12.2014**
(21) Anmeldenummer: 05750562.0
(22) Anmeldetag: 16.06.2005
(51) Int. Cl.: A23P 1/10, A23C 19/068, A22C 7/00

(54) **VORRICHTUNG UND VERFAHREN ZUM HERSTELLEN VON GEFORMTEN LEBENSMITTELARTIKELN**
DEVICE AND METHOD FOR THE PRODUCTION OF MOLDED FOOD ARTICLES
DISPOSITIF ET PROCÉDÉ POUR FABRIQUER DES PRODUITS ALIMENTAIRES MOULÉS

(30) Priorität: 19.06.2004 DE 102004029408
(43) Veröffentlichungstag der Anmeldung: 07.03.2007
(73) Patentinhaber: Züger Frischkäse AG, 9245 Oberbüren (CH); Züger, Bettina, 9500 Wil (CH)
(72) Erfinder: ZÜGER, Bettina, 9500 Wil (CH)
(74) Vertreter: Kaminski Harmann
(86) Internationale Anmeldenummer: PCT/CH2005/000338
(87) Internationale Veröffentlichungsnummer: WO 2005/122802

(56) Entgegenhaltungen:
- EP-A- 0 668 016
- WO-A-98/12934
- WO-A-2004/002229
- DE-U1- 20 114 146
- US-A- 5 902 625

## Beschreibung

Die Erfindung bezieht sich auf eine Vorrichtung und ein Verfahren zum Herstellen geformter viskoelastischer Lebensmittelartikel, insbesondere aus teigartigem, viskoelastischem Frischkäse, wie Mozarella oder Mascarpone, gemäss dem Oberbegriff von Anspruch 1 sowie dem Oberbegriff von Anspruch 15.

Bei derartigen Vorrichtungen und Verfahren werden unter Druck stehende viskolelastische Lebensmittelmassen, wie z.B. Frischkäse, in Vertiefungen (Alveolen) in einer bewegten Wand gepresst, in diesen Vertiefungen mitgeführt und vom Rest der unter Druck stehenden viskoelastischen Lebensmittelmasse abgetrennt. Somit findet gleichzeitig eine Formgebung und eine Portionierung der viskoelastischen Lebensmittelmasse statt.

Ein Beispiel für ein solches Verfahren und eine dafür geeignete Vorrichtung offenbart WO1998/12934. Diese Druckschrift offenbart eine Kochhilfe, die mit einem Fülltrichter, einer drehenden Rührvorrichtung sowie einer Formgebungsvorrichtung mit einer rotierbar gelagerten Trommel versehen ist. Die rotierbar gelagerte Trommel weist auf ihrer zylindrischen Aussenwand Zellen auf, welche mit Hilfe des Fülltrichters mit einem Lebensmittelgemisch befüllbar sind. Wenigstens eine Wand des Fülltrichters ist dabei so ausgebildet ist, dass sie an der Trommeloberfläche anliegt und beim Befüllen der Zellen das eingefüllte Gemisch von dem im Fülltrichter befindlichen Gemisch in einem Abstreifwinkel von weit mehr als 90° abtrennt.

In WO2004/002229 werden ebenfalls eine Vorrichtung und ein Verfahren zur Formgebung von drei-dimensionalen Produkten aus einer zum Verzehr geeigneten Lebensmittelmasse beschrieben. Die Vorrichtung umfasst eine Giesstrommel, deren äussere Umfangsfläche mit Aussparungen zur Aufnahme von austauschbaren Formeinsätzen versehen ist. Jeder Formeinsatz weist einen Giesshohlraum auf, der während einer Rotation der Trommel gefüllt wird, wenn der Formeinsatz an einem Massezuführelement vorbeigeführt wird. Das Massezuführelement ist im Wesentlichen als ein halbkreisförmiges Gehäuse mit einem Einlass und einem Auslass ausgestaltet, wobei über den Einlass Masse zugeführt und über den Auslass Masse den Giesshohlräumen der Trommel zugeführt wird, wobei das Massezuführelement im Wesentlichen radial zur Trommel ausgereichtet ist.

US 5,902,625 offenbart ein sehr viel einfacheres Verfahren und ein Vorrichtung zur Herstellung von faserigem halbweichem Käse, wie beispielsweise Mozarella. Bei diesem Herstellungsverfahren erfolgt die Formgebung dadurch, dass die Käsemasse durch ein Rohr gepresst und so ein kontinuierliches Band aus Käse hergestellt wird. Das so erhaltene kontinuierliche Band aus Käse wird in einen Tank mit gekühlter Sole gegeben und nach dem Abkühlen mit Hilfe von Messern in Stücke geschnitten.

Aufgrund der Viskoelastizität derartiger Massen treten in der abgetrennten und umgeformten Lebensmittelportion aufgrund von Dehnungen und Stauchungen der Masse Spannungen auf, die nach dem Ausformen bei der so geformten Lebensmittelartikel in der Regel zu Verformungen bzw. sogenanntem Verzug führen. Ein derartiger Verzug ist bei simplen Formen, wie Kugeln (Mozarella='Kugeln"), weniger auffällig und wird meistens akzeptiert.

Auf anderen Gebieten der Lebensmittelumformung, wie z.B. der Schokoladenindustrie, werden Materialien verwendet, die vorwiegend über die Kontrolle eines Parameters, wie z.B. der Temperatur, derart beeinflusst werden können, dass über eine ausreichend starke Abkühlung, z.B. von etwa 30°C bis 40°C auf etwa 0°C bis 10°C, praktisch sofort eine ausreichende Formstabilität erreicht wird.

Der Erfindung liegt die Aufgabe zugrunde, auch bei der Umformung und Portionierung viskoelastischer Lebensmittel trotz des praktisch unvermeidbaren Verzugs ordentlich geformte Lebensmittelartikel zu erhalten. Dies ist besonders wünschenswert bei symmetrisch geformten Lebensmittelartikeln, da dort ein Verzug bzw. eine nachträgliche Verformung nach dem Ausformen sehr stark auffällt.

Diese Aufgabe wird durch die Vorrichtung gemäss Anspruch 1 und das Verfahren gemäss Anspruch 15 gelöst.

Das Portionieren und Umformen erfolgt erfindungsgemäss folgendermassen:

Eine Portion der Ausgangsmasse dringt aufgrund des Pressdrucks in eine jeweilige Vertiefung ein, füllt diese aus und wird von dieser mitgeführt.
Das Abstreifen oder Abscheren der in den Vertiefungen mitgeführten Portionen von dem restlichen Ausgangsmasse-Volumen in der Presskammer erfolgt während des Vorbeibewegens der mit den Ausgangsmasse-Portionen gefüllten Vertiefungen an einer Dichtungsfläche, die als oder Abstreifkante wirkt.
Die in den Vertiefungen mitgeführten abgestreiften oder abgescherten Portionen der Ausgangsmasse werden dann aus der Presskammer herausgeführt.

Das Ausformen der aus der Presskammer herausgeführten Portionen erfolgt dann durch Auswerfen und/oder oder Ausstossen der Portionen aus den Vertiefungen in ein temperiertes Wasserbad, wo diese während einer produktspezifischen Zeitdauer verweilen.

Erfindungsgemäss ist die Abstreifkante der Rand einer in die Presskammer weisenden Abstreiffläche bzw. Scherfläche, die in einem Zwickelbereich an die Alveolenfläche des ersten Innenwand-Bereichs grenzt. Dabei bildet in dem Zwickelbereich die Tangentialebene E2 der Scherfläche mit der Tangentialebene E1 der Alveolenfläche einen Scherwinkel bzw. Abstreifwinkel α von weniger als 90°. Ausserdem sind die inneren Abmessungen der durch die Vertiefungen (Alveolen) definierten Formhohlräume des ersten Innenwand-Bereichs bezüglich der inneren Abmessungen des zur Gestalt der herzustellenden Frischkäse-Artikel komplementären Hohlraums in der Richtung parallel zur Bewegungsrichtung des ersten Innenwand-Bereichs um einen Streckfaktor S vergrössert.

Vorzugsweise liegt der Scherwinkel im Bereich von 50° bis 80° und noch bevorzugter im Bereich von 60° bis 70°.
Der hierzu entsprechende Streckfaktor liegt vorzugsweise im Bereich von 1,05 bis 1,5 und noch bevorzugter im Bereich von 1,1 bis 1,3.

Vorzugsweise ist die Presskammer temperierbar, wobei zweckmässigerweise der bewegliche erste Innenwand-Bereich der Presskammer mit einem Wärmeträgerfluid temperierbar ist, bei dem es sich vorzugsweise um Wasser handelt.

Eine gezielte zeitliche Temperaturführung des Lebensmittelmaterials während seiner Umformung kann dadurch erreicht werden, dass der bewegliche Innenwand-Bereich der Presskammer entlang seiner Bewegungsrichtung mit unterschiedlichen Temperaturen temperierbar ist.

Weiterhin ist es vorteilhaft, wenn der durch die Presse erzeugbare Pressdruck bzw. Stopfdruck einstellbar ist und/oder wenn die durch das Antriebsmittel erzeugbare Geschwindigkeit der Bewegung der Alveolenfläche entlang der Abstreifkante einstellbar ist.

Bei einer besonders bevorzugten Ausführung der erfindungsgemässen Vorrichtung ist der bewegliche erste Innenwand-Bereich der Presskammer ein Teilbereich der Zylindermantel-Aussenfläche eines zylinderförmigen Hohlkörpers, der um seine Zylinderachse als Drehachse drehangetrieben ist, wobei die als Hohlform wirkenden Vertiefungen (Alveolen) in der Zylindermantel-Aussenfläche angeordnet sind.

Vorzugsweise ist hierbei die Presskammer bzw. Stopfkammer ein ruhender Hohlkörper, der eine mit der Presse in Fluidverbindung stehende Eintrittsöffnung hat sowie eine Austrittsöffnung hat. Der Öffnungsrand der Austrittsöffnung ist derart ausgestaltet, dass der gegen diese Hohlkörper-Austrittsöffnung gedrückte Teilbereich der Zylindermantel-Aussenfläche die Hohlkörper-Austrittsöffnung abdichtet.

Diese Ausführung eignet sich besonders gut für ein kontinuierliches Verfahren.

Besonders vorteilhaft ist es, wenn die Vertiefungen (Alveolen) jeweils über einen die Zylinderwand radial durchquerenden Fluidkanal mit dem Innenraum des zylinderförmigen Hohlkörpers in Fluidverbindung stehen.
Diese Ausführung erleichtert das Ausformen bei dem kontinuierlichen Verfahren.

Bei dieser Ausführung ist ausserdem vorteilhaft, dass das Ausformen der geformten Frischkäse-Portionen durch Einwirkung der Schwerkraft und/oder Einwirkung der Fliehkraft auf die in den Vertiefungen der Zylindermantel-Aussenfläche sitzenden geformten Frischkäse-Portionen erfolgt.

Das Ausformen kann auch durch einen Wasserstrahl und/oder Druckluft unterstützt werden, der bzw. die über den radialen Fluidkanal in die Vertiefungen gelenkt wird und auf die in den Vertiefungen sitzenden geformten Frischkäse-Portionen einwirkt.

Der Wasserstrahl und/oder die Druckluft können temperiert sein. Durch diese Massnahme lässt sich gleichzeitig sowohl das Ausformen als auch das Formstabilisieren unterstützen.

Das erfindungsgemässe Verfahren eignet sich besonders gut für die Umformung von Frischkäse, wobei zumindest teilweise formstabilisierte viskoelastische Frischkäseartikel (Mozarella, Mascarpone) gewonnen werden.

Hierbei hat der temperierte Frischkäse beim Eindringen in die Vertiefungen und beim Herausführen aus der Presskammer eine Temperatur im Bereich von 60°C bis 70°C, während das temperierte Wasserbad eine Temperatur im Bereich von 5°C bis 20°C hat.

Vorzugsweise hat das temperierte Wasserbad ein erstes Wasserbad mit einer Temperatur im Bereich von 10°C bis 20°C sowie ein zweites Wasserbad mit einer Temperatur im Bereich von 5°C bis 10°C, in denen man die ausgeformten Portionen des Frischkäses der Reihe nach verweilen lässt.

Vorzugsweise hat der temperierte Frischkäse beim Eindringen in die Vertiefungen und beim Herausführen aus der Presskammer eine Temperatur im Bereich von 64°C bis 66°C.

Diese Massnahmen unterstützen die Formstabilisierung der geformten Frischkäseartikel.

Die erfindungsgemässe Problemlösung setzt somit beim Problem der Deformation an. Bereits bei der Entwicklung und Ausgestaltung des Formwerkzeuges (Gestalt des Hohlraums der Vertiefungen bzw. Alveolen) muss ein Verzug einberechnet werden und der Formhohlraum so beschaffen sein, dass das nachträgliche Verzugsverhalten der viskoelastischen Masse aufgefangen werden kann.

Zur Formstabilisierung während des Ausformprozesses kann das Ausformwerkzeug so ergänzt werden, dass rund um die Einzelformen hohe Temperaturunterschiede steuerbar sind, z.B. durch im Werkzeug rund um die Einzelform herum integrierte Heiz- und Kühlelemente.

In die Einzelformen (Vertiefungen, Alveolen) der Formtrommel (Zylinder) wird die pastafilierte Käsemasse eingedrückt. Über die Drehbewegung der Trommel und durch einen von innerhalb der Trommel kommenden Wasser- oder Luftstrahl (Loch in der Einzelform) wird die Symbolfigur (geformter Lebensmittelartikel) aus der Einzelform herausgeholt. Die Formstabilität wird durch die Entwicklung einer geeigneten Form sowie durch die Ausformung der warmen Käsemasse in kaltem Wasser oder ergänzend über hohe Temperaturunterschiede erreicht.

Die Erfindung verwendet ein Werkzeug zur Ausformung von plastischen Figuren, die Verzug unterliegen, statt üblichen Kugelformen.

Die dabei getroffenen Massnahmen sind: Entwicklung von Einzelfiguren unter Einrechnung des Verzugs für die jeweilige Figur und einer Anordnung dieser Figuren, die eine Ausformung der vielen Einzelformen möglich macht.

Weitere Vorteile, Merkmale und Anwendungsmöglichkeiten der Erfindung ergeben sich aus der nun folgenden Beschreibung verschiedener Teilaspekte und Beispiele, die jedoch nicht einschränkend aufzufassen sind.

Es zeigen die Figuren:
- Fig. 1: eine schematische Gesamtansicht der erfindungsgemässen Vorrichtung;
- Fig. 2: eine schematische Schnittansicht des in Fig. 1 eingerahmten Teils;
- Fig. 3A: eine Draufsicht auf einen viskoelastischen Lebensmittelartikel; und
- Fig. 3B: eine Draufsicht auf eine erfindungsgemässe Alveole zur erfindungsgemässen Herstellung des in Fig. 3A abgebildeten Lebensmitteartikels;
- Fig. 4: eine Formtrommel "Herzli";
- Fig. 5: die Anordnung der Einzelformen "Herzli" sowie die Anordnung von Fluidstrahlöffnungen sowie Herzform mit Kompensation für Längsverzug;
- Fig. 6: eine Formtrommel "Kreuzli";
- Fig. 7: die Anordnung der Einzelformen "Kreuzli";
- Fig. 8: die Anordnung der Einzelformen "Kreuzli" sowie die Anordnung von Fluidstrahlöffnungen sowie Kreuzform mit Kompensation für Längsverzug (Einbeziehung des bei der Ausformung und Lagerung entstehenden Verzugs);
- Fig. 9: eine schematische Darstellung der Abwicklung der Zylinderfläche mit Alveolen gemäss Fig. 4; und
- Fig. 10: eine schematische Darstellung der Abwicklung der Zylinderfläche mit Alveolen gemäss Fig. 6.

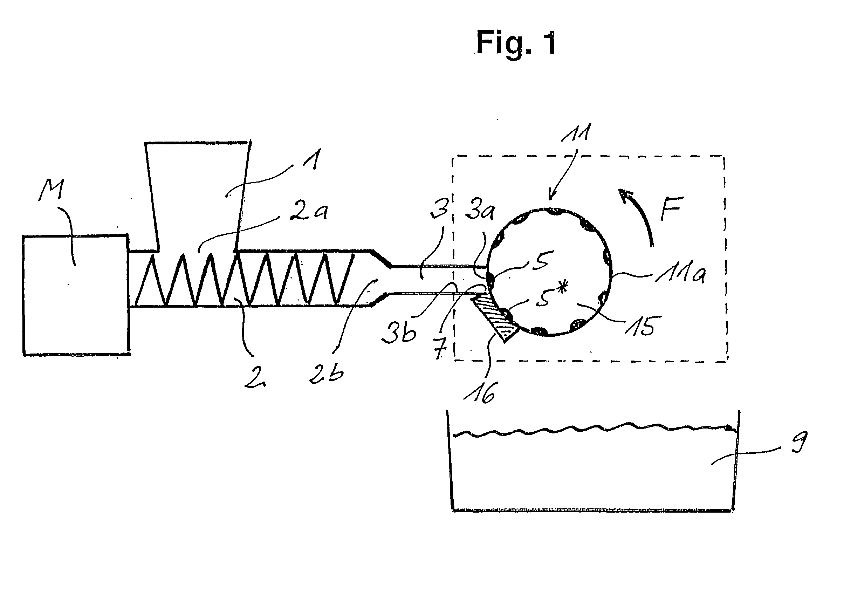

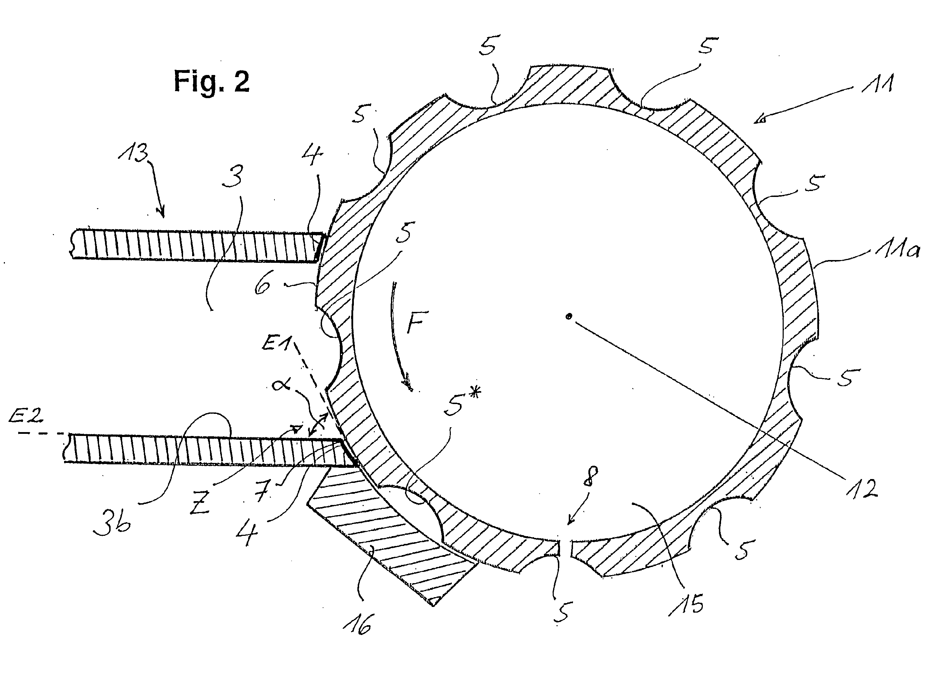

Fig. 1 ist eine schematische Gesamtansicht einer besonders vorteilhaften Ausführung der erfindungsgemässen Vorrichtung. Fig. 2 ist eine schematische Schnittansicht des in Fig. 1 eingerahmten Teils.

Ein Vorratsbehälter 1 für Frischkäse ist mit dem Eingang 2a einer Presse 2 verbunden. Die Presse 2 wird von einer Antriebseinheit M angetrieben und dient zum Druckaufbau in dem Frischkäse. Über ihren Ausgang 2b ist die Presse 2 mit einer Presskammer 3 verbunden, die von einem ersten Innenwand-Bereich 3a und einem zweiten Innenwand-Bereich 3b begrenzt ist. Der erste Innenwand-Bereich 3a und der zweite Innenwand-Bereich 3b grenzen an einer Dichtungsfläche 4 aneinander (siehe Fig. 2).

Der erste Innenwand-Bereich 3a ist ein Teil der Zylindermantel-Aussenfläche 11 a eines zylinderförmigen Hohlkörpers 11, der um seine Zylinderachse 12 von (nicht gezeigten Antriebsmitteln) drehangetrieben ist. Der Zylinderkörper 11 wird derart drehangetrieben, dass sich seine Zylindermantel-Aussenfläche 11 a in der durch den Pfeil F angedeuteten Umfangsrichtung bewegt. In der Zylindermantel-Aussenfläche 11a sind Vertiefungen 5, sog. Alveolen, enthalten (siehe auch Fig. 2), die als Formhohlraum dienen.

Der Innenraum 15 des Hohlzylinders 11 kann durch ein Wärmeträgerfluid, wie z.B. Wasser, durchströmt werden, oder die Zylindermantel-Innenfläche 11 b kann mit diesem Wärmeträgerfluid besprüht werden. Aus lebensmittelhygienischen Gründen wird Wasser als Wärmeträgerfluid bevorzugt. Der Hohlzylinder besteht vorzugsweise aus Edelstahl oder Aluminiumlegierung. Anstelle des durchströmten Innenraums 15 oder der besprühten Zylindermantel-Innenfläche 11 b kann die Wand des zylinderförmigen Hohlkörpers 11 auch von Wärmeträgerfluid-Kanälen (nicht gezeigt) durchzogen sein. Dadurch ist eine sehr präzise Temperierung der Alveolen 5 möglich.

Entlang der Bewegungsrichtung bzw. Umfangsrichtung F des Hohlzylinders 11 folgt unmittelbar auf den ersten Innenwand-Bereich 3a der Presskammer 3 noch ein zusätzliches Anpresselement 16 mit einer zur Zylindermantel-Aussenfläche 11a komplementär gekrümmten Kontaktfläche 16a. Zusammen mit den an diesem Anpresselement 16 in der Bewegungsrichtung F vorbeibewegten Alveolen 5, werden vollständig abgeschlossene Formhohlräume 5* bestimmt. Auch das Anpresselement 16 kann temperiert werden. Auf diese Weise können die sich bewegenden Formhohlräume 5* (siehe Fig. 2) während ihres Verweilens an dem Anpresselement 16 intensiv temperiert werden. Das Anpresselement 16 besteht entweder vollständig aus Kunststoff oder ist an seiner gekrümmten Kontaktfläche 16a mit einem Kunststoff beschichtet, um Metallabrieb zwischen der Zylindermantel-Aussenfläche 11 a und der Kontaktfläche 16a zu vermeiden. Als Beschichtungsmaterial kann z.B. Teflon verwendet werden.

Unterhalb des drehangetriebenen Hohlzylinders 11 befindet sich ein Wasserbehälter 9 mit temperiertem Wasser.

Im Betrieb gelangt die viskoelastische Frischkäsemasse aus dem Vorratsbehälter 1 in die Presse 2. Dort wird die viskoelastische Masse komprimiert und in die Presskammer bzw. Stopfkammer 3 gepresst. In der Presskammer 3 werden die Alveolen 5 der sich an der Presskammer 3 vorbeibewegenden Zylindermantel-Aussenfläche 11 a, die den bewegten ersten Innenwand-Bereich 3a bildet, von der viskoelastischen Masse gefüllt. Wenn die so gefüllten Alveolen 5 im Verlaufe ihrer Bewegung F an einer zwischen dem ruhenden zweiten Innenwand-Bereich 3b und dem bewegten ersten Innenwand-Bereich 3a ausgebildeten Abstreifkante 7 vorbeibewegl werden, wird die in der Alveole 5 mitgeführte Masse vom Rest der die Presskammer 3 ausfüllenden viskoelastischen Masse abgestreift bzw. abgeschert und somit "portioniert".

Während ihrer Vorbeibewegung an dem Anpresselement 16 befindet sich die viskoelastische "Portion" der Lebensmittelmasse in dem rundum geschlossenen Formhohlraum 5* (siehe auch Fig. 2). Dort kann die eingeschlossene viskoelastische Portion Relaxieren. Durch Einstellen des in der Presskammer 3 herrschenden Pressdrucks, der Drehgeschwindigkeit und der Temperierung des Hohlzylinders 11 sowie ggf. der Temperierung des Anpresselements 16 kann das Relaxationsverhalten der viskoelastischen Masse in dem Formhohlraum 5* beeinflusst werden. Eine weitere Einflussnahme auf das Relaxationsverhalten in dem Formhohlraum 5* kann durch Einstellen der Oberflächenrauhigkeit der Kontaktfläche 16a erfolgen.

In Fig. 2 erkennt man deutlicher, dass eine besonders starke Prägung des Formgedächtnisses auch über die Wahl des Abstreifwinkels bzw. Scherwinkels α erfolgt, der zwischen der Tangentialebene E1 und der Tangentialebene E2 aufgespannt wird. Dieser Winkel α ist vorzugsweise kleiner als 90°. Je kleiner dieser Winkel in dem Zwickelbereich Z ist, desto sanfter (d.h. mit weniger induzierten Spannungen im Material) erfolgt das Abtrennen der Portionen in den unter der Abstreifkante bzw. Scherkante verschwindenden Alveolen 5*. Dennoch entstehen beim Umformen und Abtrennen des viskoelastischen Materials stets Spannungen im Material, so dass an den geformten Lebensmittelartikeln nach dem Ausformen immer ein Verzug erfolgt.

Dieser Verzug wird erfindungsgemäss durch eine spezielle Formgebung der Alveolen 5 weitgehend kompensiert.

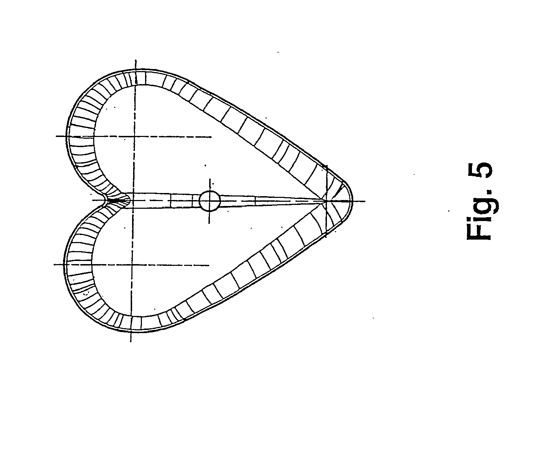

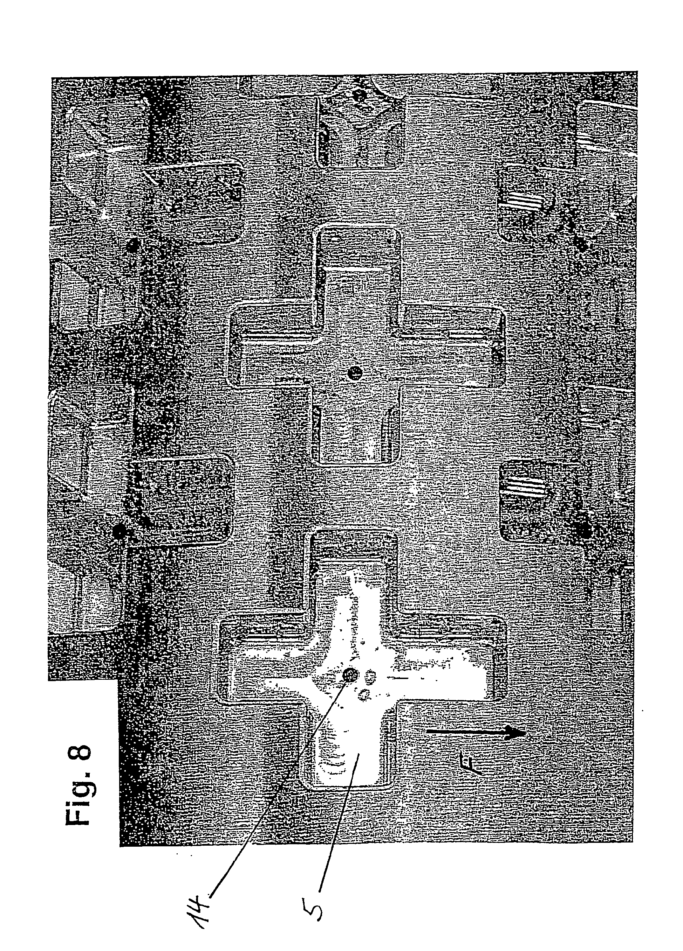

In Fig. 2 ist auch bei einer Alveole ein Fluidkanal 8 gezeigt, der den Innenraum 15 des Hohlzylinders 11 mit der Alveole 5 verbindet. Der Einfachheit halber Ist hier nur ein Fluidkanal 8 gezeigt. Tatsächlich weisen aber alle Alveolen 5 des Hohlzylinders 11 derartige Kanäle 8 auf. Durch diese Fluidkanäle 8 kann man Fluid über die Fluidstrahlöffnungen 14 (siehe Fig. 5, 8) in die Alveole 5 einströmen lassen, wodurch das Ausformen ausgelöst oder unterstützt wird.

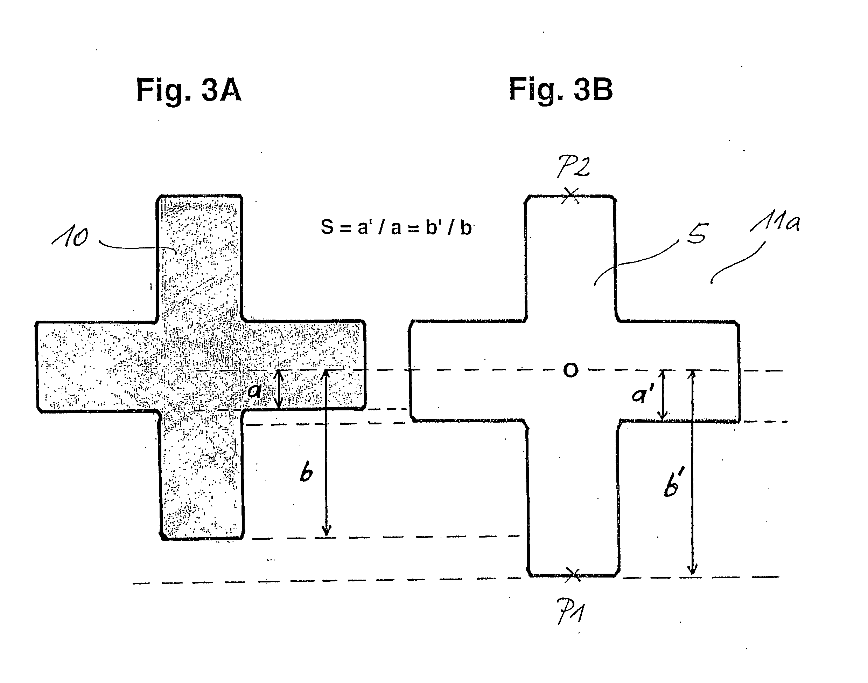

Ein besonders anschauliches Beispiel für das erfindungsgemässe Kompensieren des nach dem Ausformen auftretenden Verzuges ist in Fig. 3A und Fig. 3B gezeigt.
Fig. 3A ist eine Draufsicht auf einen viskoelastischen Lebensmittelartikel; und Fig. 3B ist eine Draufsicht auf eine erfindungsgemässe Alveole zur erfindungsgemässen Herstellung des in Fig. 3A abgebildeten Lebensmittelartikels.

Der Pfeil F zeigt die Bewegungsrichtung der Zylindermantel-Aussenfläche 11 a (siehe Fig. 1 oder Fig. 2). Wenn sich die Zylindermantel-Aussenfläche 11 a mit der in ihr enthaltenen kreuzförmigen Alveole 5 in der Figur nach unten bewegt, bedeutet dies, dass sich die Abstreifkante 7 (siehe Fig. 1 oder Fig. 2) in der Figur nach oben bewegt. Das bedeutet, dass sich die Abstreifkante 7 in Fig. 3B von PunktP1 nach Punkt P2 bewegt und dabei über den Rand der mit viskoelastischer Massegefüllten Alveole 5 entlang streicht. Es hat sich gezeigt, dass eine weitgehende Kompensation des Verzuges nach dem Entformen durch Strecken des Hohlraums der Alveole 5 bezüglich der zum herzustellenden Lebensmittelartikel 10 komplementären Form möglich ist. Hierzu wird die zur Gestalt des Lebensmittelartikels 10 komplementäre Gestalt des Alveolen-Hohlraums um einen Steckfaktor S parallel zur Bewegungsrichtung F gestreckt. Mit anderen Worten werden die inneren Abmessungen a und b der zur Gestalt des Lebensmittelartikels 10 komplementären Hohlform (nicht dargestellt) durch die etwas grösseren Abmessungen a' und b' ersetzt, wobei S = a'/a = b'/b gilt.

Eine Optimierung der Verzugskompensation lässt sich somit in erster Linie durch Abstimmen des Streckfaktors S und des Winkels α erreichen.

Eine weitere Optimierung kann durch Einstellen des in der Presskammer 3 herrschenden Pressdrucks und der Temperierung des Hohlzylinders 11 sowie ggf. der Temperierung des Anpresselements 16 erfolgen.

Somit ermöglicht die erfindungsgemässe Vorrichtung einerseits eine "fixierte" Optimierung durch die optimale Wahl und Abstimmung des Streckfaktors S und des Abstreifwinkels α sowie eine "variable" Optimierung während des erfindungsgemässen Verfahrens durch Einstellen der Drehgeschwindigkeit des Hohlzylinders 11, des Pressdrucks in der Presskammer 3 und ggf. durch Einstellen der Temperierung der Alveolen 5*.

Man kann auch die Abweichung der momentan ausgeformten Lebensmittelartikel 10 von der angestrebten Sollgestalt bzw. Zielgestalt erfassen, um dann entsprechende Massnahmen bei den während des Betriebs veränderbaren Parametern wie Drehzahl des Hohlzylinders 11, Scherwinkel α, "räumliches Temperaturprofil" (Temperierung am Hohlzylinder 11 vor dem Ausformen) oder "zeitliches Temperaturprofil" (Wassertemperaturen in Wasserbehältern, die von den geformten Lebensmittelartikeln seriell durchlaufen werden).

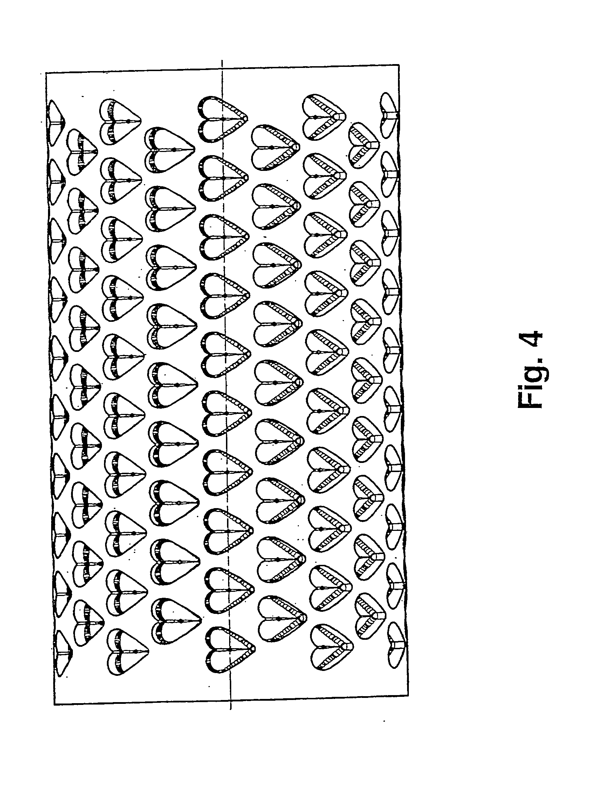

Die Fig. 4 und 5 sind dreidimensionale Ansichten eines ersten Beispiels eines erfindungsgemässen Hohlzylinders 11 mit herzförmigen Alveolen 5 in der Zylindermantel-Aussenfläche 11 a. Man erkennt auch Fluidstrahlöffnungen 14 in der Mitte jeder Alveole 5. Durch diese Fluidstrahlöffnungen 14 kann über die Fluidkanäle 8 (siehe Fig. 2) Wasser und/oder Luft aus dem Innenraum 15 des drehangetriebenen Hohlzylinders 11 in die mit den geformten Lebensmittelartikeln gefüllten Alveolen 5 eingeleitet werden. Dadurch kann einerseits das Ausformen unterstützt werden und wird andererseits eine Möglichkeit zur Temperierung (Temperaturschock zur Erhöhung der Formstabilität) geboten.

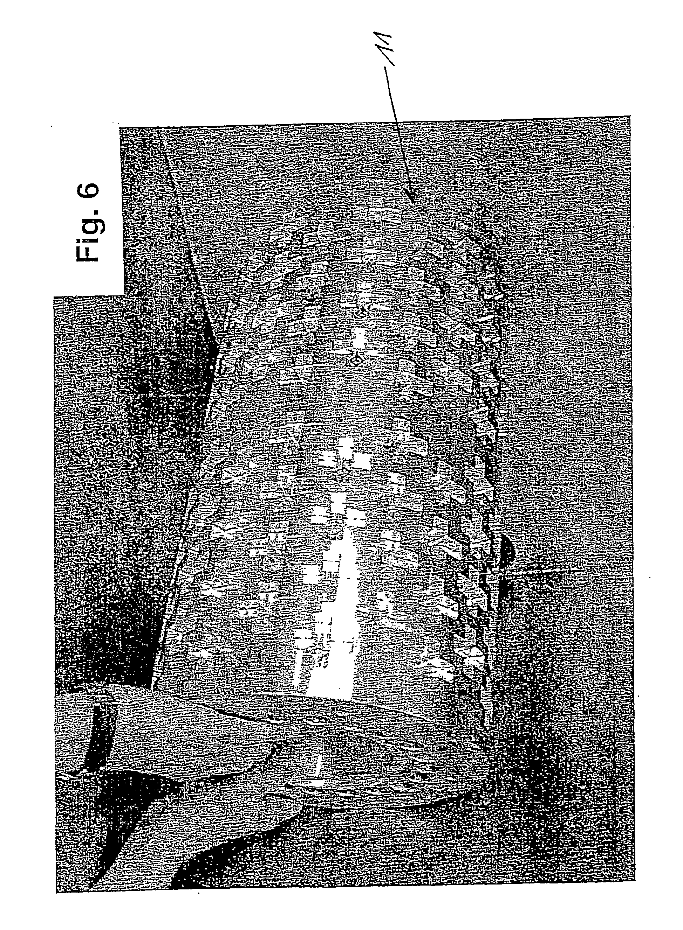

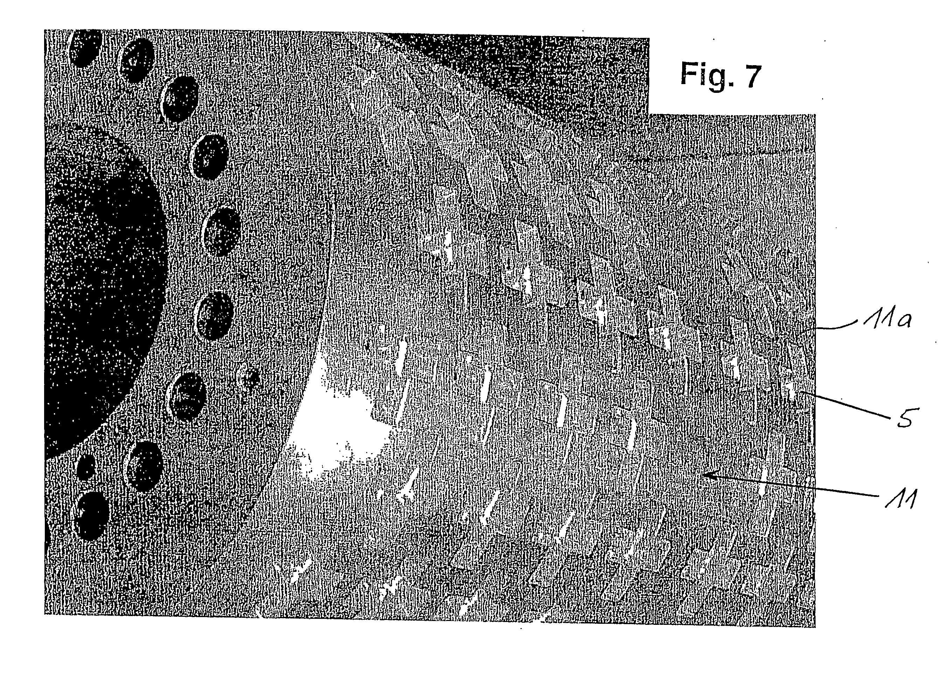

Die Fig. 6, 7 und 8 sind dreidimensionale Ansichten eines zweiten Beispiels eines erfindungsgemässen Hohlzylinders 11 mit kreuzförmigen Alveolen 5 in der Zylindermantel-Aussenfläche 11 a. Man erkennt auch hier die Fluidstrahlöffnungen 14 in der Mitte jeder Alveole 5. Durch diese Fluidstrahlöffnungen 14 kann auch hier über die Fluidkanäle 8 (siehe Fig. 2) Wasser und/oder Luft aus dem Innenraum 15 des drehangetriebenen Hohlzylinders 11 in die mit den geformten Lebensmittelartikeln gefüllten Alveolen 5 eingeleitet werden.

In Fig. 8 sieht man ähnlich wie in der schematischen Darstellung von Fig. 3B die um einen Streckfaktor S verlängerten Dimensionen parallel zur Bewegungsrichtung F.

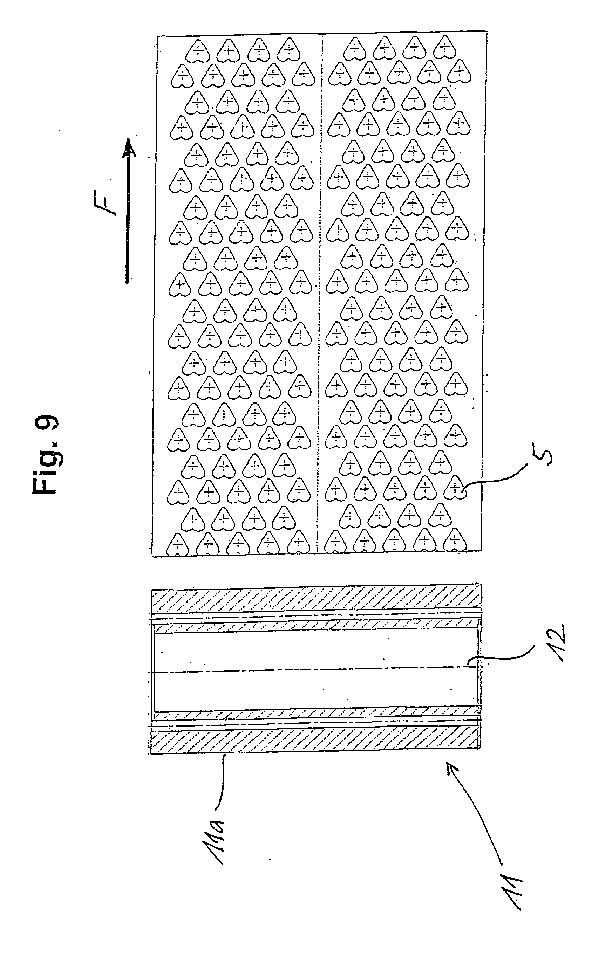

Fig. 9 ist eine schematische Darstellung eines Längsschnitts des Hohlzylinders 11 entlang der Zylinderachse 12 sowie einer Abwicklung seiner Zylindermantel-Aussenfläche11a mit herzförmigen Alveolen 5 gemäss Fig. 4.

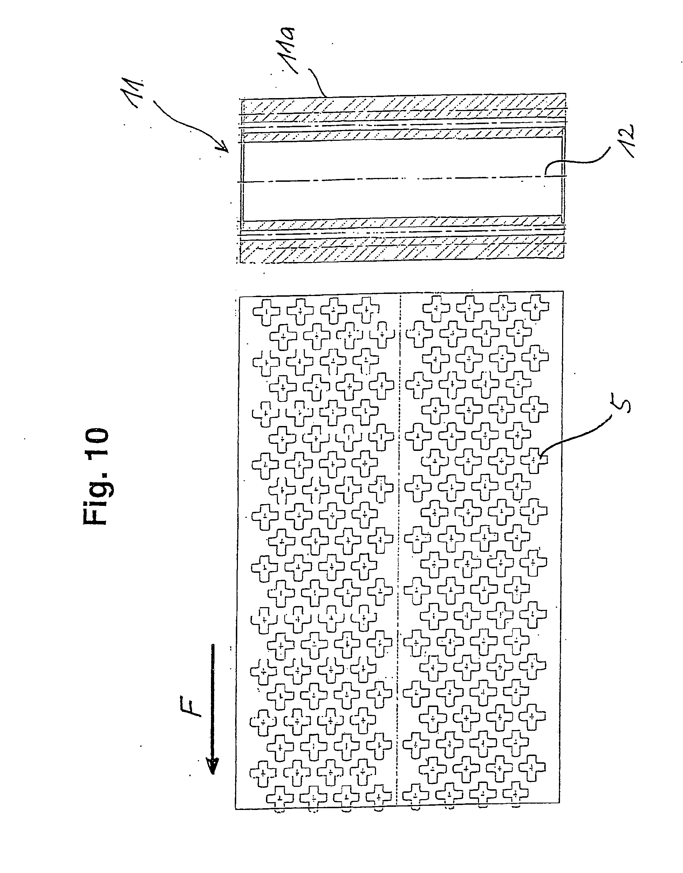

Fig. 10 ist eine schematische Darstellung eines Längsschnitts des Hohlzylinders 11 entlang der Zylinderachse 12 sowie einer Abwicklung seiner Zylindermantel-Aussenfläche 11 a mit kreuzförmigenförmigen Alveolen gemäss Fig. 6.

**Bezugszeichen**

| | | | |
|---|---|---|---|
| 1 | Vorratsbehälter | 11b | Zylindermantel-Innenfläche |
| 2 | Presse | 12 | Zylinderachse bzw. Drehachse |
| 2a | Eingang der Presse | 13 | ruhender Hohlkörper |
| 2b | Ausgang der Presse | 14 | Fluidstrahlöffnung |
| 3 | Presskammer bzw. Stopfkammer | 15 | Innenraum |
| 3a | erster Innenwand-Bereich | 16 | Anpresselement |
| 3b | zweiter Innenwand-Bereich | 16a | Kontaktfläche |
| 4 | Dichtungsfläche | E1 | Tangentialebene der Alveolenfläche (erster Innenwand-Bereich 3a) |
| 5 | Vertiefung bzw. Alveole | | |
| 5* | geschlossener Formhohlraum | E2 | Tangentialebene der Scherfläche |
| 6 | Alveolenfläche | | (zweiter Innenwand-Bereich 3b) |
| 7 | Abstreifkante | F | Bewegungsrichtung |
| 8 | Ausformmittel bzw. Fluldkanal | M | Antriebseinheit |
| 9 | Wasserbehälter | S | Streckfaktor der Alveole entlang der |
| 10 | Frischkäse-Artikel | | Bewegungsrichtung |
| 11 | zylinderförmiger Hohlkörper, drehangetrieben | Z | Zwickelftäche |
| | | α | Abstreifwinkel bzw. Scherwinkel |
| 11a | Zylindermantel-Aussenfläche | | |

## Patentansprüche

1. Vorrichtung zum Herstellen geformter viskoelastischer Lebensmittelartikel, insbesondere aus teigartigem, viskoelastischem Frischkäse, wie Mozarella oder Mascarpone, mit:
- einem Vorratsbehälter (1) für das viskoelastische Lebensmittel als Ausgangsmasse;
- einer Presskammer (3), deren Innenwand einen ersten Innenwand-Bereich (3 a) und einen zweiten Innenwand-Bereich (3b) aufweist, die einander an einer Dichtungsfläche (4) abdichtend berühren, wobei der erste Innenwand-Bereich (3a) gegenüber dem zweiten Innenwand-Bereich (3b) relativ bewegbar ist und sich die beiden Innenwand-Bereiche (3a, 3b) während einer Relativbewegung entlang der Dichtungsfläche (4) abdichtend berühren;
- Alveolen (5) in der in die Presskammer (3) weisenden Alveolenfläche (6) des ersten Innenwand-Bereichs (3a), die als Hohlform wirken;
- einer Presse (2), deren Eingang (2a) mit dem Vorratsbehälter (1) verbunden ist und deren Ausgang (2b) mit der Presskammer (3) verbunden ist;
- einer Abstreifkante (7), die an der in die Presskammer (3) weisenden Alveolenfläche (6) des ersten Innenwand-Bereichs (3a) anliegt und an der die Alveolen (5) in der in die Presskammer (3) weisenden Alveolenfläche (6) des ersten Innenwand-Bereichs (3a) derart vorbei bewegbar sind, dass sich die Abstreifkante (7) quer zur Bewegungsrichtung (F) über die Öffnung der Alveolen (5) erstreckt, wobei durch die Abstreifkante die in den Alveolen (5) mitgeführte Ausgangsmasse vom Rest der die Presskammer (3) ausfüllenden Ausgangsmasse abgestreift wird, wenn die gefüllten Alveolen (5) an der Abstreifkante vorbeibewegt werden;
- einem Antriebsmittel zum Bewegen der ersten Innenwand (3a) entlang der Abstreifkante (7) und Herausführen der Alveolen (5) aus der Presskammer (3);
- einem Ausformmittel (8) zum Ausformen der aus der Presskammer (3) herausgeführten Portionen durch Auswerfen und/oder oder Ausstoßen aus den Alveolen (5); und
**gekennzeichnet,**
- **durch** einen Wasserbehälter (9) zum Auffangen der ausgeformten Lebensmittelartikel,
- dass die Abstreifkante (7) der Rand einer in die Presskammer (3) weisenden Abstreiffläche ist, die in einem Zwickelbereich (Z) an die Alveolenfläche (6) des ersten Innenwand-Bereichs (3 a) grenzt, wobei in dem Zwickelbereich (Z) im Bereich der Abstreifkante eine Tangentialebene E2 (Fig. 2) des zweiten Innenwand-Bereichs (3b) mit einer Tangentialebene El (Fig. 2) der Alveolenfläche (6) einen Abstreifwinkel α im Bereich von 50° bis 80° bildet;
- und dass die inneren Abmessungen (a', b') der durch die Aveolen (5) definierten Formhohlräume des ersten Innenwand-Bereichs (3a) bezüglich der inneren Abmessungen (a, b) des zur Gestalt der herzustellenden Lebensmittelartikel (10) komplementären Hohlraums in der Richtung parallel zur Bewegungsrichtung (F) des ersten Innenwand-Bereichs um einen Streckfaktor S vergrößert sind.

2. Vorrichtung nach Anspruch 1, **dadurch gekennzeichnet, dass** der Scherwinkel α im Bereich von 60° bis 70° liegt.

3. Vorrichtung nach Anspruch 1 oder 2, **dadurch gekennzeichnet, dass** der Streckfaktor S im Bereich von 1,05 bis 1,5 liegt.

4. Vorrichtung nach Anspruch 3, **dadurch gekennzeichnet, dass** der Streckfaktor S im Bereich von 1,1 bis 1,3 liegt.

5. Vorrichtung nach einem der vorhergehenden Ansprüche, **dadurch gekennzeichnet, dass** die Prssskammer (3) temperierbar ist.

6. Vorrichtung nach Anspruch 5, **dadurch gekennzeichnet, dass** der bewegliche erste Innenwand-Bereich (3a) der Presskammer (3) mit einem Wärmeträgerfluid temperierbar ist.

7. Vorrichtung nach Anspruch 6, **dadurch gekennzeichnet, dass** das Wärmeträgerfluid Wasser ist.

8. Vorrichtung nach Anspruch 6 oder 7, **dadurch gekennzeichnet, dass** der bewegliche Innenwand-Bereich (3a) der Presskammer (3) entlang seiner Bewegungsrichtung (F) mit unterschiedlichen Temperaturen temperierbar ist.

9. Vorrichtung nach einem der vorhergehenden Ansprüche, **dadurch gekennzeichnet, dass** der durch die Presse (2) erzeugbare Pressdruck einstellbar ist.

10. Vorrichtung nach einem der vorhergehenden Ansprüche, **dadurch gekennzeichnet, dass** die durch das Antriebsmittel erzeugbare Geschwindigkeit der Bewegung (F) der Alveolenfläche (6) entlang der Abstreifkante (7) einstellbar ist.

11. Vorrichtung nach einem der vorhergehenden Ansprüche, **dadurch gekennzeichnet, dass** der bewegliche erste Innenwand-Bereich (3 a) der Presskammer (3) ein Teilbereich der Zylindermantel-Außenfläche (11a) eines zylinderförmigen Hohlkörpers (11) ist, der um seine Zylinderachse (12) als Drehachse drehangetrieben ist, wobei die als Hohlform wirkenden Aveolen (5) in der Zylindermantel-Außenfläche (11a) angeordnet sind.

12. Vorrichtung nach Anspruch 11, **dadurch gekennzeichnet, dass** die Presskammer (3) ein ruhender Hohlkörper (13) ist, der eine mit der Presse (2) in Fluidverbindung stehende Eintrittsöffnung hat sowie eine Austrittsöffnung hat, deren Öffnungsrand (4) derart ausgestaltet ist, dass der gegen diese Hohlkörper-Austrittsöffnung gedrückte Teilbereich (3 a) der Zylindermantel-Außenfläche (11a) die Hohlkörper-Austrittsöffnung abdichtet.

13. Vorrichtung nach Anspruch 11 oder 12, **dadurch gekennzeichnet, dass** die Aveolen (5) jeweils über einen die Zylinderwand radial durchquerenden Fluidkanal (14) mit dem Innenraum (15) des zylinderförmigen Hohlkörpers (11) in Fluidverbindung stehen.

14. Verfahren zum Herstellen geformter und zumindest teilweise formstabilisierter viskoelastischer Lebensmittelartikel, insbesondere aus teigartigem, viskoelastischem Frischkäse, wie Mozarella oder Mascarpone, unter Verwendung der Vorrichtung gemäß einem der Ansprüche 1 bis 13, wobei das Verfahren die folgenden Schritte aufweist:
- Bereitstellen von temperiertem viskoelastischem Lebensmittel als Ausgangsmasse; Pressen der viskoelastischen Ausgangsmasse in eine Presskammer, deren Innenwand einen ersten und einen zweiten Innenwand-Bereich aufweist, wobei der erste Innenwand-Bereich gegenüber dem zweiten Innenwand-Bereich relativ bewegt wird und sich die beiden Innenwand-Bereiche während der Relativbewegung entlang einer Dichtungsfläche abdichtend berühren, und wobei der erste Innenwand-Bereich in seiner in die Presskammer weisenden Fläche Alveolen aufweist, die als Hohlform wirken, so dass jeweils eine Portion der Ausgangsmasse aufgrund des Pressdrucks in eine jeweilige Alveole eindringt, diese ausfüllt und aufgrund der Relativbewegung von dieser mitgeführt wird;
- Abstreifen oder Abscheren der in den Alveolen mitgeführten Portionen von dem restlichen Ausgangsmasse-Volumen in der Presskammer während des Vorbeibewegens der mit den Ausgangsmasse-Portionen gefüllten Alveolen des ersten Innenwand-Bereichs an der Dichtungsfläche, so dass die in den Alveolen mitgeführten abgestreiften oder abgescherten Portionen der Ausgangsmasse aus der Presskammer herausgeführt werden;
- Ausformen der aus der Presskammer herausgeführten Portionen durch Auswerfen und/oder oder Ausstoßen der Portionen aus den Alveolen in ein temperiertes Wasserbad; und
- Verwellenlassen der ausgeformten Portionen in dem temperierten Wasserbad.

15. Verfahren nach Anspruch 14 zur Herstellung geformter und zumindest teilweise formstabilisierter viskoelastischer Frischkäseartikel, insbesondere aus Mozarella oder Mascarpone, **dadurch gekennzeichnet, dass** die temperierte Frischkäse, beim Eindringen in die Alveolen und beim Herausführen aus der Presskammer eine Temperatur im Bereich von 605°C bis 70°C hat; und dass das temperierte Wasserbad eine Temperatur im Bereich von 5°C bis 20°C hat.

16. Verfahren nach Aspruch 15, **dadurch gekennzeichnet, dass** das temperierte Wasserbad ein erstes Wasserbad mit einer Temperatur im Bereich von 100°C bis 20°C sowie ein zweites Wasserbad mit einer Temperatur im Bereich von 5°C bis 10°C aufweist, in denen man die ausgeformten Portionen der Reihe nach verweilen lässt.

17. Verfahren nach Anspruch 15 oder 16, **dadurch gekennzeichnet, dass** der temperierte Frischkäse beim Eindringen in die Alveolen und beim Herausführen aus der Presskammer eine Temperatur im Bereich von 64°C bis 66°C hat.

18. Verfahren nach einem der Ansprüche 15 bis 17 unter Verwendung der Vorrichtung gemäß Anspruch 11 bis 13, **dadurch gekennzeichnet, dass** das Ausformen der geformten Frischkäse-Portionen durch Einwirkung der Schwerkraft und/oder Einwirkung der Fliehkraft auf die in den Alveolen der Zylindermantel-Aussenfläche sitzenden geformten Portionen erfolgt.

19. Verfahren nach Anspruch 18 unter Verwendung der Vorrichtung gemäß Anspruch 14, **dadurch gekennzeichnet, dass** das Ausformen durch einen Wasserstrahl und/oder Druckluft unterstützt wird, der/die über den radialen Fluidkanal in die Alveolen gelenkt wird und auf die in den Alveolen sitzenden geformten Portionen einwirkt.

20. Verfahren nach Anspruch 19, dadurch gekenntzeichnet, dass der Wasserstrahl und/oder die Druckluft temperiert sind.

## Claims

1. Device for producing moulded viscoelastic food articles, in particular made of dough-like viscoelastic fresh cheese such as mozzarella or mascarpone, having:
- a reservoir (1) for the viscoelastic foodstuff as starting mixture;
- a press chamber (3) whose inner wall has a first inner wall region (3a) and a second inner wall region (3b) which are in sealing contact with one another at a seal surface (4), wherein the first inner wall region (3a) can be moved relative to the second inner wall region (3b) and the two inner wall regions (3a, 3b) are in sealing contact with one another along the seal surface (4) during a relative movement;
- alveoli (5) in the alveolate surface (6), facing into the press chamber (3), of the first inner wall region (3a), which function as a hollow mould;
- a press (2) whose inlet (2a) is connected to the reservoir (1) and whose outlet (2b) is connected to the press chamber (3);
- a scraping edge (7) which bears against the alveolate surface (6), facing into the press chamber (3), of the first inner wall region (3a), and past which the alveoli (5) in the alveolate surface (6), facing into the press chamber (3), of the first inner wall region (3a), can be moved such that the scraping edge (7) extends, transverse to the direction of movement (F), over the openings of the alveoli (5), wherein the scraping edge scrapes off the starting mixture fed into the alveoli (5) from the remainder of the starting mixture filling the press chamber (3) when the filled alveoli (5) are moved past the scraping edge;
- a drive means for moving the first inner wall (3a) along the scraping edge (7) and for moving the alveoli (5) out from the press chamber (3);
- a demoulding means (8) for demoulding the portions moved out from the press chamber (3) by ejecting and/or expelling from the alveoli (5); and
**characterized**
- **by** a water container (9) for catching the demoulded food articles;
- in that the scraping edge (7) is the rim of a scraping surface which faces into the press chamber (3) and which adjoins the alveolate surface (6) of the first inner wall region (3a) in an interstitial region (Z), wherein in the interstitial region (Z) in the region of the scraping edge a tangential plane E2 (Fig. 2) of the second inner wall region (3b) forms a scraping angle α in the range of 50° to 80° with a tangential plane E1 (Fig. 2) of the alveolate surface (6);
- and in that the inner dimensions (a', b') of the mould cavities, defined by the alveoli (5), of the first inner wall region (3a) are increased, in the direction parallel to the direction of movement (F) of the first inner wall region, by a stretch factor S with respect to the inner dimensions (a, b) of that cavity which is complementary to the shape of the food articles (10) to be produced.

2. Device according to Claim 1, **characterized in that** the shear plane angle α is in the range from 60° to 70°.

3. Device according to Claim 1 or 2, **characterized in that** the stretch factor S is in the range from 1.05 to 1.5.

4. Device according to Claim 3, **characterized in that** the stretch factor S is in the range from 1.1 to 1.3.

5. Device according to any one of the preceding claims, **characterized in that** the press chamber (3) can be temperature-controlled.

6. Device according to Claim 5, **characterized in that** the temperature of the movable first inner wall region (3a) of the press chamber (3) can be controlled by means of a heat transfer fluid.

7. Device according to Claim 6, **characterized in that** the heat transfer fluid is water.

8. Device according to Claim 6 or 7, **characterized in that** the temperature of the movable inner wall region (3a) of the press chamber (3) can be set to different temperatures along its direction of movement (F).

9. Device according to any one of the preceding claims, **characterized in that** the press pressure, which can be generated by means of the press (2), is adjustable.

10. Device according to any one of the preceding claims, **characterized in that** the speed of the movement (F) of the alveolate surface (6) along the scraping edge (7), which can be generated by means of the drive means, is adjustable.

11. Device according to any one of the preceding claims, **characterized in that** the movable first inner wall region (3a) of the press chamber (3) is a partial region of the cylindrical jacket outer surface (11a) of a cylindrical hollow body (11), which partial region is driven in rotation about its cylinder axis (12) as axis of rotation, wherein the alveoli (5) which act as hollow moulds are arranged in the cylindrical jacket outer surface (11a).

12. Device according to Claim 11, **characterized in that** the press chamber (3) is a stationary hollow body (13) which has an inlet opening which is fluidically connected to the press (2) and an outlet opening whose opening rim (4) is configured such that the partial region (3a) of the cylindrical jacket outer surface (11a), which is pressed against this hollow body outlet opening, seals the outlet opening.

13. Device according to Claim 11 or 12, **characterized in that** the alveoli (5) are in each case fluidically connected, via a fluid duct (14) which passes radially through the cylindrical wall, to the inner space (15) of the cylindrical hollow body (11).

14. Method for producing moulded and at least partially dimensionally stable viscoelastic food articles, in particular made of dough-like viscoelastic fresh cheese such as mozzarella or mascarpone, using the device according to any one of Claims 1 to 13, wherein the method has the following steps:
- preparing temperature-controlled viscoelastic foodstuff as starting mixture;
- pressing the viscoelastic starting mixture into a press chamber whose inner wall has a first and a second inner wall region, wherein the first inner wall region is moved relative to the second inner wall region and the two inner wall regions are in sealing contact with one another along a seal surface during the relative movement, and wherein the first inner wall region has, in its surface facing into the press chamber, alveoli which act as hollow moulds, such that in each case a portion of the starting mixture enters and fills a respective alveolus on account of the press pressure and is carried by the latter on account of the relative movement;
- scraping off or shearing off, from the remaining starting mixture volume in the press chamber, the portions carried in the alveoli as the alveoli of the first inner wall region, which are filled with the starting mixture portions, move past the seal surface, such that the scraped-off or sheared-off portions of the starting mixture, which are carried in the alveoli, are moved out from the press chamber;
- demoulding the portions moved out from the press chamber by ejecting and/or expelling the portions from the alveoli into a temperature-controlled water bath; and
- leaving the demoulded portions to dwell in the temperature-controlled water bath.

15. Method according to Claim 14 for producing moulded and at least partially dimensionally stable viscoelastic fresh cheese articles, in particular made of mozzarella or mascarpone, **characterized in that** the temperature-controlled fresh cheese has a temperature in the range from 60°C to 70°C when entering the alveoli and when moved out from the press chamber; and **in that** the temperature-controlled water bath has a temperature in the range from 5°C to 20°C.

16. Method according to Claim 15, **characterized in that** the temperature-controlled water bath has a first water bath with a temperature in the range from 10°C to 20°C and a second water bath with a temperature in the range from 5°C to 10°C, in which the demoulded portions are allowed to dwell **in that** order.

17. Method according to Claim 15 or 16, **characterized in that** the temperature-controlled fresh cheese has a temperature in the range from 64°C to 66°C when entering the alveoli and when moved out from the press chamber.

18. Method according to any one of Claims 15 to 17, using the device according to Claims 11 to 13, **characterized in that** the moulded fresh cheese portions are demoulded using the action of gravity and/or the action of centrifugal force on the moulded portions in the alveoli of the cylindrical jacket outer surface.

19. Method according to Claim 18, using the device according to Claim 14, **characterized in that** demoulding is aided by a water jet and/or compressed air which is directed into the alveoli via the radial fluid duct and acts on the moulded portions in the alveoli.

20. Method according to Claim 19, **characterized in that** the water jet and/or the compressed air are temperature-controlled.

## Revendications

1. Dispositif pour fabriquer des produits alimentaires viscoélastiques moulés, en particulier en fromage frais viscoélastique de type pâte comme la mozarella ou le mascarpone avec :
- un réservoir (1) pour le produit alimentaire viscoélastique en tant que masse de départ ;
- une chambre de pressage (3) dont la paroi intérieure présente une première zone de paroi intérieure (3a) et une seconde zone de paroi intérieure (3b) qui se touchent de manière étanche sur une surface d'étanchéité (4), la première zone de paroi intérieure (3a) étant mobile de manière relative par rapport à la seconde zone de paroi intérieure (3b) et les deux zones de paroi intérieure (3a, 3b) se touchant de manière étanche le long de la surface d'étanchéité (4) pendant un mouvement relatif ;
- des alvéoles (5) de la première zone de paroi intérieure (3a) dans la surface d'alvéoles (6) dans la chambre de pressage (3) qui agissent comme moule creux ;
- une presse (2) dont l'entrée (2a) est reliée au réservoir (1) et dont la sortie (2b) est reliée à la chambre de pressage (3) ;
- une arête de raclage (7) qui repose sur la surface d'alvéoles (6) de la première zone de paroi intérieure (3a) dans la chambre de pressage (3) et le long de laquelle les alvéoles (5) de la première zone de paroi intérieure (3a) dans la chambre de pressage (3) sont mobiles de telle manière que l'arête de raclage (7) s'étend transversalement par rapport au sens de mouvement (F) au-dessus de l'ouverture des alvéoles (5), cependant que la masse de départ qui est entraînée dans les alvéoles (5) est raclée par l'arête de raclage du reste de la masse de départ qui remplit la chambre de pressage (3) lorsque les alvéoles remplies (5) passent le long de l'arête de raclage ;
- un moyen d'entraînement pour déplacer la première paroi intérieure (3a) le long de l'arête de raclage (7) et pour faire sortir les alvéoles (5) de la chambre de pressage (3) ;
- un moyen de démoulage (8) pour démouler les portions sorties de la chambre de pressage (3) en les éjectant et/ou en les poussant hors des alvéoles (5) et **caractérisé**
- **par** un conteneur d'eau (9) pour réceptionner les produits alimentaires démoulés,
- en ce que l'arête de raclage (7) est le bord d'une surface de raclage dans la chambre de pressage (3) qui est adjacente dans une zone de gousset (Z) à la surface d'alvéoles (6) de la première zone de paroi intérieure (3a), cependant qu'un plan tangentiel E2 (fig. 2) de la seconde zone de paroi intérieure (3b) forme un angle α de raclage de l'ordre de 50° à 80° avec un plan tangentiel E1 (fig. 2) dans la zone de gousset (Z) dans la zone de l'arête de raclage
- et que les dimensions intérieures (a', b') des espaces creux de moulage de la première zone de paroi intérieure définis par les alvéoles (5) sont agrandies d'un facteur d'allongement S pour ce qui est des dimensions intérieures (a, b) de l'espace creux complémentaire pour la configuration de la forme des produits alimentaires à fabriquer (10) dans le sens parallèle au sens de mouvement (F) de la première zone de paroi intérieure.

2. Dispositif selon la revendication 1, **caractérisé en ce que** l'angle α de cisaillement est de l'ordre de 60° à 70°.

3. Dispositif selon la revendication 1 ou 2, **caractérisé en ce que** le facteur d'allongement S est de l'ordre de 1,05 à 1,5.

4. Dispositif selon la revendication 1 ou 2, **caractérisé en ce que** le facteur d'allongement S est de l'ordre de 1,1 à 1,3.

5. Dispositif selon l'une des revendications précédentes, **caractérisé en ce que** la chambre de pressage (3) peut être tempérée.

6. Dispositif selon la revendication 5, **caractérisé en ce que** la première zone de paroi intérieure mobile (3a) de la chambre de pressage (3) peut être tempérée avec un fluide caloporteur.

7. Dispositif selon la revendication 6, **caractérisé en ce que** le fluide caloporteur est de l'eau.

8. Dispositif selon la revendication 6 ou 7, **caractérisé en ce que** la zone de paroi intérieure mobile (3a) de la chambre de pressage (3) peut être tempérée le long de son sens de déplacement (F) avec différentes températures.

9. Dispositif selon l'une des revendications précédentes, **caractérisé en ce que** la pression de pressage qui peut être générée par la presse (2) est réglable.

10. Dispositif selon l'une des revendications précédentes, **caractérisé en ce que** la vitesse du déplacement (F) de la surface d'alvéoles (6) le long de l'arête de raclage (7) qui peut être générée par le moyen d'entraînement est réglable.

11. Dispositif selon l'une des revendications précédentes, **caractérisé en ce que** la première zone de paroi intérieure mobile (3a) de la chambre de pressage (3) est une zone partielle de la surface extérieure de l'enveloppe (11a) de cylindre d'un corps creux cylindrique (11) qui est entraîné en rotation autour son axe de cylindre (12) comme axe de rotation, cependant que les alvéoles (5) qui agissent comme moule creux sont placées dans la surface extérieure de l'enveloppe (11a) de cylindre.

12. Dispositif selon la revendication 11, **caractérisé en ce que** la chambre de pressage (3) est un corps creux au repos (13) qui a une ouverture d'entrée en communication fluide avec la presse (2) ainsi qu'une ouverture de sortie dont le bord d'ouverture (4) est configuré de telle manière que la zone partielle (3a) de la surface extérieure de l'enveloppe (11a) de cylindre qui est poussée contre cette ouverture de sortie du corps creux rend étanche l'ouverture de sortie du corps creux.

13. Dispositif selon la revendication 11 ou 12, **caractérisé en ce que** les alvéoles (5) sont en communication fluide avec l'espace intérieur (15) du corps creux cylindrique (11) respectivement par un canal de fluide (14) qui traverse radialement la paroi de cylindre.

14. Procédé pour fabriquer des produits alimentaires viscoélastiques moulés et au moins partiellement de forme stabilisée, en particulier en fromage frais viscoélastique de type pâte comme la mozarella ou le mascarpone, en utilisant le dispositif selon l'une des revendications 1 à 13, le procédé présentant les étapes suivantes :
- mise à disposition de produit alimentaire viscoélastique tempéré comme masse de départ ;
- pressage de la masse de départ viscoélastique dans une chambre de pressage dont la paroi intérieure présente une première zone de paroi intérieure et une seconde zone de paroi intérieure, la première zone de paroi intérieure étant mobile de manière relative par rapport à la seconde zone de paroi intérieure et les deux zones de paroi intérieure se touchant de manière étanche le long d'une surface d'étanchéité pendant le mouvement relatif et la première zone de paroi intérieure présentant des alvéoles dans sa surface orientée dans la chambre de pressage qui agissent comme moule creux si bien qu'une portion de la masse de départ pénètre respectivement dans une alvéole respective en raison de la pression de pressage, remplit celle-ci et est entraînée par celle-ci en raison du mouvement relatif ;
- raclage ou cisaillement des portions entraînées dans les alvéoles du volume restant de la masse de départ dans la chambre de pressage pendant le déplacement de passage des alvéoles de la première zone de paroi intérieure remplies de portions de masse de départ le long de la surface d'étanchéité si bien que les portions de la masse de départ raclées ou cisaillées entraînées dans les alvéoles sortent de la chambre de pressage ;
- démoulage des portions sorties de la chambre de pressage par éjection et/ou poussée des portions hors des alvéoles dans un bain-marie tempéré et
- laisser séjourner les portions démoulées dans le bain-marie tempéré.

15. Procédé selon la revendication 14 pour fabriquer des produits alimentaires viscoélastiques moulés et au moins partiellement de forme stabilisée, en particulier en fromage frais viscoélastique de type pâte comme la mozarella ou le mascarpone, **caractérisé en ce que** le fromage frais tempéré a une température de l'ordre de 60 °C à 70 °C lors de la pénétration dans les alvéoles et de la sortie de la chambre de pressage et que le bain-marie tempéré a une température de l'ordre de 5 °C à 20 °C.

16. Procédé selon la revendication 15, **caractérisé en ce que** le bain-marie tempéré présente un premier bain-marie avec une température de l'ordre de 10 °C à 20 °C ainsi qu'un second bain-marie avec une température de l'ordre de 5 °C à 10 °C dans lesquels on fait séjourner les portions démoulées l'une après l'autre.

17. Procédé selon la revendication 15 ou 16, **caractérisé en ce que** le fromage frais tempéré a une température de l'ordre de 64 °C à 66 °C lors de la pénétration dans les alvéoles et de la sortie de la chambre de pressage.

18. Procédé selon l'une des revendications 15 à 17 qui utilise le dispositif selon les revendications 11 à 13, **caractérisé en ce que** le démoulage des portions moulées de fromage frais se fait par l'action de la force de gravité et/ou l'action de la force centrifuge sur les portions moulées qui se trouvent dans les alvéoles de la surface extérieure de l'enveloppe de cylindre.

19. Procédé selon la revendication 18 qui utilise le dispositif selon la revendication 14, **caractérisé en ce que** le démoulage est soutenu par un jet d'eau et/ou de l'air comprimé qui est dirigé par le canal de fluide radial dans les alvéoles et qui agit sur les portions moulées qui se trouvent dans les alvéoles.

20. Procédé selon la revendication 19, **caractérisé en ce que** le jet d'eau et/ou l'air comprimé est tempéré.
